# EUROPEAN PATENT APPLICATION

(11) **EP 0 930 771 A2**
(43) Date of publication of application: **21.07.1999**
(21) Application number: 98310799.6
(22) Date of filing: 30.12.1998
(51) Int. Cl.: H04N 1/04

(54) **Compact multi-functional apparatus**

(30) Priority: 30.12.1997 KR 7823997
(71) Applicant: SAMSUNG ELECTRONICS CO., LTD., Suwon-City, Kyungki-do (KR)
(72) Inventor: Lee, Hyun-jun, Yongin, Kyonggi-do (KR); Kim, Seong-woo, 106-12 Bangi 2-dong, Songpa-gu, Seoul (KR)
(74) Representative: Tunstall, Christopher Stephen

(57) **Abstract**

A multi-functional apparatus is described. A body includes a section for conveying record sheets and a service station alongside the record sheet conveying section. A guide spans the service station and the record sheet conveying section. A carriage that carries a printhead and a scanner module reciprocates from the service station across the record sheet conveying section along the guide. The printhead and the scanner module are so positioned relative to one another on the carriage that, when the carriage is in the service station, the printhead is further away from the record sheet conveying section than is the scanner module. This allows the width of the apparatus to be reduced.

## Description

### BACKGROUND TO THE INVENTION

Generally, "multi-functional apparatus" refers to a device that includes a scanner, a copier, a printer, a facsimile device and a modem, that is connected to a computer and prints or stores in a hard disk of the computer data scanned by the scanner or transferred through the modem from another system. Thus, a multi-functional apparatus can act as a facsimile device, a printer, a scanner and a copier.

Scanners used in such multi-functional apparatus having printer, scanner, facsimile device and copier functions are generally one of two kinds: sheet feed scanners and flat bed scanners. Sheet feed scanners are usually used in facsimile devices and scan data from a document line-by-line while feeding the document. On the other hand, flat bed scanners are usually used in copiers and scan data on a document placed upon a flat bed while moving in a main scanning direction.

Multi-functional apparatus having sheet feed scanners are typically provided with facsimile devices using ink or toner, depending on the method of printing employed, and a PC interface. Multi-functional apparatus having flat bed scanners are typically provided with a printer and a facsimile device. Multi-functional apparatus having sheet feed scanners suffer from a disadvantage in that since both a scanner module and a printhead are mounted on a carriage, the width of the apparatus is increased.

### SUMMARY OF INVENTION

The present invention is designed to overcome this problem. Thus, it is an object of the present invention to provide a compact multi-functional apparatus.

A multi-functional apparatus according to the present invention comprises:
a body including a section for conveying record sheets in a predetermined record sheet conveying direction and a service station alongside the record sheet conveying section; and
a printhead and a scanner module adapted to reciprocate from the service station across the record sheet conveying section in a direction substantially normal to the record sheet conveying direction;
in which the printhead and the scanner module are so positioned relative to one another that, in the service station, the printhead is further away from the record sheet conveying section than is the scanner module.

### BRIEF DESCRIPTION OF THE DRAWINGS

The present invention will now be described by way of example with reference to the accompanying drawings in which:
FIG. 1 is block diagram of a multi-functional apparatus according to the present invention;
FIG. 2 is a schematic view of a carriage;
FIG. 3 shows a movement of the carriage; and
FIG. 4 shows the printhead positioned in a service station.

### DETAILED DESCRIPTION OF THE PREFERRED EMBODIMENT

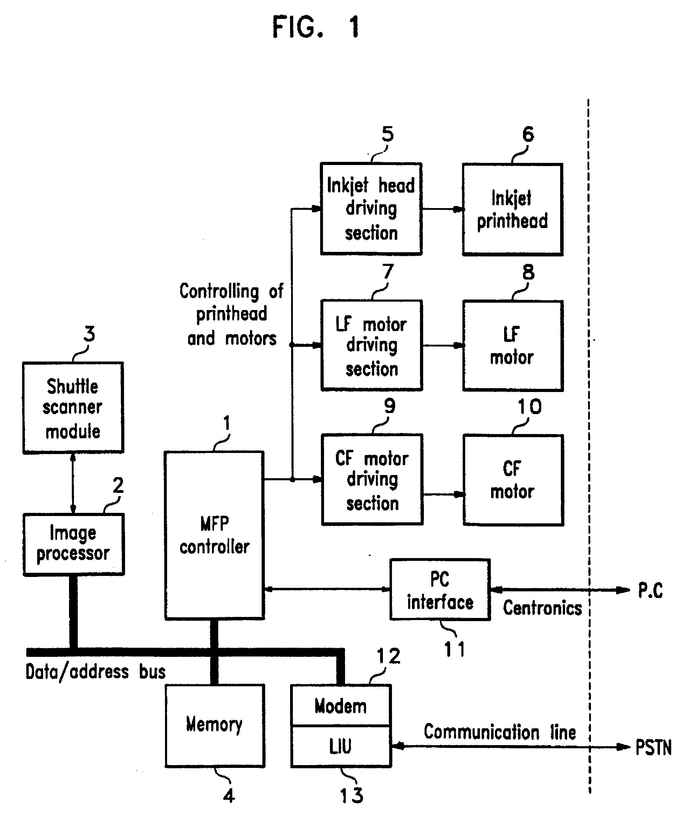

FIG. 1 is a block diagram of the multi-functional apparatus according to the present invention. A multi-functional peripheral controller 1 (hereinafter, referred to a s MFP controller) controls the entire system of the multi-functional apparatus. The MFP controller 1 controls a memory 4 containing a system driving program and an image processor 2 so that a shuttle scanner module 3 scans image data or the image processor 2 processes the image data. That is, the image processor 2 rasterizes the image data scanned by the scanner module 3. Further, the MFP controller 1 controls a modem 8 and a LIU 9 in order to transfer facsimile image data processed by the image processor.

In addition, the MFP controller 1 controls an interface 11 to transfer the data to the personal computer as well as controls an inkjet head driver 5, a LF motor driver 7, and a CR motor driver 9 to print data transferred from the personal computer and facsimile data received by a facsimile device. The image processor 2 performs shading and gamma correction, edge emphasis and error diffusion of the image data scanned by the shuttle scanner module 3.

The memory includes an EPROM containing a system program, a SRAM for processing system data, and a DRAM for storing printing data, scanned data, and image data received by the facsimile device. The interface 11 is a module for interfacing with the personal computer and transfers the scanned data to the personal computer and receives the printing data from the personal computer.

The inkjet printhead driver 5 is operated according to the control of the MFP controller 1 and the LF motor driver 7 and the CR motor driver 9 receive control signals for a phase and a position of a carriage motor from the MFP controller 1 so as to drive the LF motor 8 and the CR motor 10. The modem modulates the image data to communicate with the other facsimile device and the LIU 13 makes the multi-functional apparatus to connect with the PSTN.

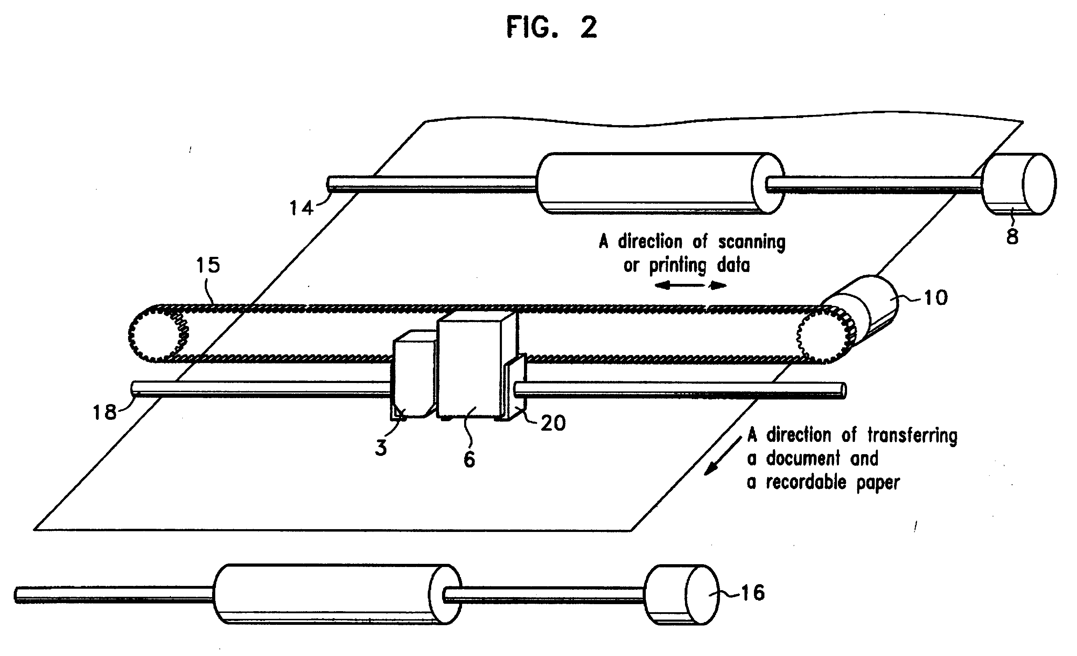

In the multi-functional apparatus having the shuttle scanning module, as shown in FIG. 2, the LF motor 8 makes the document or the record paper move through the paper transferring section while the scanning module and the inkjet printhead module are reciprocally moved along the guide shaft and across the width of the document or the record paper to scan the document or to print the data on the record paper.

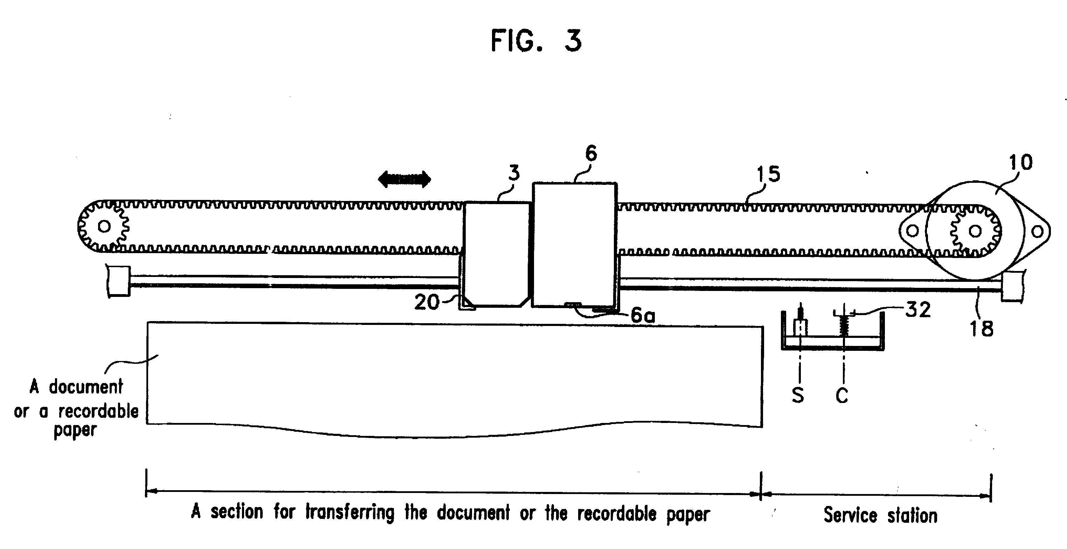

Referring to FIG. 3, the multi-functional apparatus according to the present invention includes the scanning module 3 and the inkjet printhead 6 mounted on the carriage 20 which is reciprocally moved along the guide shaft 18. The scanning module 3 is provided with a charge coupled device board, a lens, and a light emitting source and the inkjet printhead 6 includes nozzles 6a.

According to the present invention, the scanning module 3 is mounted on the carriage 20 to be near the paper transferring section. That is, the inkjet printer is divided into the paper transferring section in which the document or the record paper is transferred and the service station in which the scanning module 3 and the inkjet printhead 6 stay when stop the scanning or printing. The scanning module 3 is mounted together with the inkjet printhead on the carriage 20 to be positioned near the paper transferring section. Preferably, the scanning module 3 is at an outside of the character recognising region of the paper transferring section.

According to this embodiment of the present invention, moreover, the service station is present at the left side of the paper transferring section. The scanning module 3 is disposed at the right side of the inkjet printhead 6 on the carriage 20. However, the service station may be at the right side of the paper transferring section. In that case, the scanning module 3 is positioned at the left side of the inkjet printhead 6 on the carriage 20.

The carriage 20 is driven by means of a driving force of the CR motor 10. That is, the driving force generated by the CR motor 10 is transferred to the timing belt 15 to drive the carriage 20 connected to the timing belt 15. Thus, the scanning module 3 and the inkjet printhead 6 on the carriage 20 are moved along the guide shaft 18. Also, the inkjet printhead 6 is reciprocally moved by the CR motor 10 along the guide shaft 10 while the inkjet printhead 6 injects ink through the nozzles 6a to print the data on the record paper. The LF motor 8 feeds the record motor.

When a position detecting sensor 31 detects the inkjet printhead 6 during the printing operation, the inkjet printhead 6 is moved by a controller (not shown) to a position S in the service station 30. On the other hand, the inkjet printhead 6 is moved to an initial position C so that the nozzle 6a of the printhead is closed by a cap 32 for the ink to be prevented from being dried.

The operation of the apparatus will now be described. When the multi-functional apparatus receives a command for printing or scanning operation from a host computer, the carriage 20 is moved along the guide shaft 18 to an end of the guide shaft 18 so that the nozzle 6a of the inkjet printhead 6 is positioned at the position S. Then, the carriage 20 is reciprocally moved along the guide shaft 18 while the inkjet printhead 6 performs the printing operation.

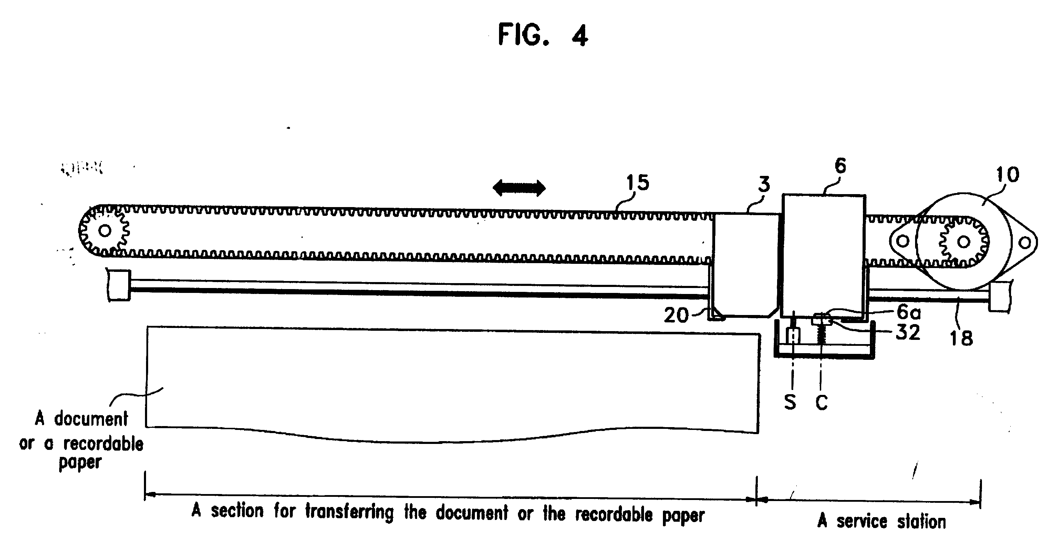

When the printing operation is completed, the carriage 20 is moved along the guide shaft 18 to the service station. As shown in FIG. 4, when the position detecting sensor 31 detects the carriage 20, the controller controls the inkjet printhead 4 so that the nozzle 6a is engaged with the cap 32. At that time, the scanning module 3 is positioned near the paper transferring section.

As described above, since it is possible to make the carriage 20 having the scanning module 3 and the inkjet printhead 6 mounted thereon move reciprocally along a small length of the guide shaft. As a result, there is an advantage in that the multi-functional apparatus can be made to be small. That is, the scanning module 3 is mounted to be adjacent to the character recognising region and the printhead 6 is disposed to be at the side of the scanning module 3, allowing the width of the multi-functional apparatus to be reduced.

According to the present invention, as described above, it is possible to move the carriage having the scanning module and the inkjet printhead along a relatively small length of the guide shaft, allowing the size of the apparatus to be reduced. Accordingly, manufacturing costs can be reduced.

## Claims

1. A multi-functional apparatus comprising:
a body including a section for conveying record sheets in a predetermined record sheet conveying direction and a service station alongside the record sheet conveying section; and
a printhead and a scanner module adapted to reciprocate from the service station across the record sheet conveying section in a direction substantially normal to the record sheet conveying direction;
in which the printhead and the scanner module are so positioned relative to one another that, in the service station, the printhead is further away from the record sheet conveying section than is the scanner module.

2. Apparatus according to claim 1 comprising a carriage that carries the printhead and the scanner module and is adapted to reciprocate from the service station across the record sheet conveying section in the said direction substantially normal to the record sheet conveying direction and in which the printhead and the scanner module are so positioned relative to one another on the carriage that, when the carriage is in the service station, the printhead is further away from the record sheet conveying section than is the scanner module.

3. Apparatus according to claim 2 further comprising a guide that spans the service station and the record sheet conveying section in the said direction substantially normal to the record sheet conveying direction and in which the carriage is adapted to reciprocate along the guide.

4. Apparatus according to claim 2 or claim 3 in which, when the carriage is in the service station, the scanner module remains in the record sheet conveying section, but the printhead does not.

5. Apparatus according to any one of claims 2-4 in which, when the carriage is in the service station, the scanner module is adjacent to the edge of a character recognising region of the record sheet conveying section.

6. Apparatus according to any preceding claim in which the printhead is an inkjet printhead.

7. A multi-functional apparatus as described with reference to and as illustrated in the accompanying drawings.
